# EUROPÄISCHE PATENTSCHRIFT

(11) **EP 1 249 328 B1**
(45) Veröffentlichungstag und Bekanntmachung des Hinweises auf die Patenterteilung: **16.12.2009**
(21) Anmeldenummer: 02004817.9
(22) Anmeldetag: 02.03.2002
(51) Int. Cl.: B29C 33/30, B29C 39/02, B29C 39/26, B29L 31/30

(54) **Anordnung mit verformbarer Matte zur Herstellung von dreidimensionalen Bauteilen und Verfahren zu ihrer Herstellung**
Structure comprising a deformable mat for producing three-dimensional parts and method of its production
Arrangement avec natte déformable pour produire des pièces tridimensionelles et procédé de sa fabrication

(30) Priorität: 12.04.2001 DE 10118281
(43) Veröffentlichungstag der Anmeldung: 16.10.2002
(73) Patentinhaber: Bayerische Motoren Werke Aktiengesellschaft, 80809 München (DE)
(72) Erfinder: Lindner, Walter, 82140 Olching (DE); Feess, Ronald, 85652 Pliening (DE); Maurer, Christoph, Prof., 81547 München (DE)

(56) Entgegenhaltungen:
- DE-A- 2 838 684
- DE-A- 3 400 309
- DE-A- 19 810 478
- FR-A- 993 104
- US-A- 5 217 669
- US-A- 5 851 563
- WILHELM SAHLBERG GMBH & CO.: 'Sahlberg Industrie-Handbuch', 1998, FELDKIRCHEN Seiten B 8 - B 9

## Beschreibung

Die Erfindung bezieht sich auf eine Anordnung zur Herstellung von dreidimensionalen Bauteilen nach dem Oberbegriff des Anspruchs 1 und auf ein Verfahren zur Herstellung einer verformbaren Matte gemäß Anspruch 7.

Aus der DE 198 10 478 A ist eine Vorrichtung zum Herstellen von dreidimensional verformten Bauteilen bekannt. Hierbei wird eine Grundplatte verwendet, auf der höhenverstellbare Stempel angeordnet sind Auf diesen Stempeln wird eine verformbare Matte aufgelegt, auf die dann das dreidimensional zu verformende Bauteil aufgelegt wird. Die hier beschriebene Matte aus Moosgummi hat sich in der Praxis jedoch nicht bewährt.

Aufgabe der vorliegenden Erfindung ist es, eine für die bekannte Vorrichtung geeignete Matte vorzuschlagen.

Diese Aufgabe wird erfindungsgemäß durch die Merkmale des ersten Anspruchs gelöst. Eine Matte auf Silikonbasis mit den beschriebenen Eigenschaften ist leicht genug, um problemlos benutzt werden zu können. Andererseits weist sie aber eine genügende Eigensteifigkeit auf, damit nicht eine unnötige Anzahl von Stützelementen benötigt wird. Damit können die Stützelemente in einem größeren Rasterabstand gesetzt werden, was die gesamte Vorrichtung verbilligt.

Unter Bauteile im Sinne der Erfindung werden nicht nur Bauteile aus einem unter Wärme plastisch verformbaren Material wie Kunststoff oder Glas verstanden, sondern auch Laminate.

Die aus der DE 198 10 478 A bekannte Vorrichtung eignet sich in Verbindung mit der erfindungsgemäßen Matte somit auch zur Herstellung von Bootsrümpfen, Segeln, Projektionsöberflächen und ähnlichern, die aus Laminaten, Gießwerkstoffen, mit Gießwerkstoffen verstärkten Geweben und ähnlichem aufgebaut sind.

Die Weiterbildungen der Erfindung nach den Ansprüchen 2 bis 6 beschreiben ein bevorzugtes Zwischenelement, das besonders gut zwischen der Matte einerseits und den Stützelementen andererseits angeordnet werden kann. Diese Zwischenelemente werden besonders dann angewandt, wenn schwächere Oberflächenkrümmungen verlangt werden. Diese Zwischenelemente können rund, eckig, in Streifen oder in Gitterstruktur aufgebaut sein. Als Materialien können alle elastischen Werkstoffe verwendet werden, bevorzugt werden Federstahl und Plexiglas. Je nach Material und Krümmung müssen diese Zwischenelemente mit Einschnitten versehen werden, um den Materialfluss auszugleichen.

Anspruch 7 beschreibt ein bevorzugtes Herstellungsverfahren für eine Matte auf Silikonbasis.

Im Folgenden wird die Erfindung anhand eines bevorzugten Ausführungbeispiels näher erläutert. Es stellen dar:
- Figur 1a: Eine perspektivische Ansicht einer Vorrichtung mit verformbarer Matte;
- Figur 1b: eine Seitenansicht gemäß Figur 1 a;
- Figur 2a bis 2c: schematisierte Ansichten verschiedener Zwischenelemente;
- Figur 3: eine schematisierte Ansicht eines Herstellungswerkzeuges.

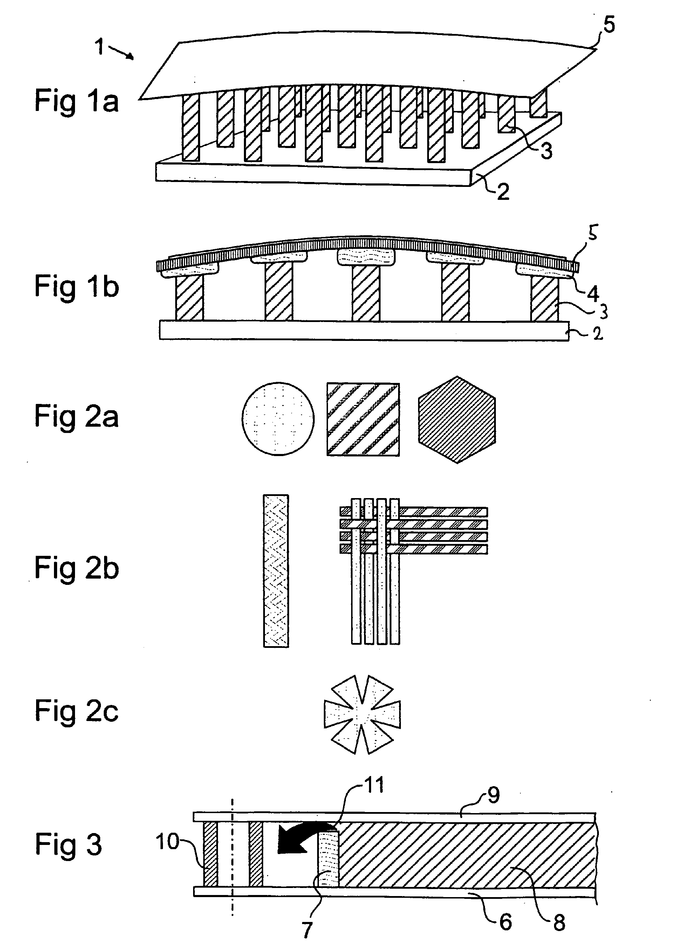

In Figur 1a ist schematisiert eine perspektivische Ansicht einer Vorrichtung 1 zum Herstellen dreidimensional verformter Bauteile dargestellt. Sie besteht aus einer Grundplatte 2, auf der eine Vielzahl von Stützelementen 3 rasterförmig aufgestellt sind. Diese Stützelemente 3 sind in ihrer Höhe verstellbar. Die Verstellung kann anhand von CAD-Daten des zu erzeugenden Bauteils eingestellt werden. Es ist jedoch genauso gut möglich, die Einstellung von Hand oder anhand anderer Daten vorzunehmen.

Auf diesen Stützelementen 3 liegt unter Zwischenschaltung elastischer Zwischenelemente 4 (Figur 1b) die erfindungsgemäß verformbare Matte 5 auf. Diese Matte dient als in sich geschlossene Trägerfläche, auf dann das zu verformende Bauteil, beispielsweise eine Plexiglasscheibe, im erwärmten Zustand oder andere Bauteile aus Thermoplasten, Laminaten, Gießwerkstoffen oder ähnliches aufgelegt bzw. aufgebracht wird. Da das zu verformende Bauteil keine Formbeständigkeit in der Ebene der Matte 5 besitzt, wenn es auf diese gelegt wird, passt es sich der Form/Krümmung der Matte 5 an. Anschließend wird durch geeignete Maßnahmen eine Formbeständigkeit des Bauteils herbeigeführt, z. B: bei Thermoplasten durch Erkalten.

Als Zwischenelemente 4 können gemäß Figur 2a runde Zwischenelemente oder gemäß Figur 2b rechteckige Zwischenelemente verwendet werden. Jedoch sind genauso gut quadratische oder mehreckige Zwischenelemente denkbar. Auch können die Zwischenelemente aus einer Gitterstruktur oder mehrlagig aufgebaut sein. Um eine vollflächige Auflage mit der Matte 5 einerseits und der Oberfläche der Stützelemente 3 andererseits zu erreichen, können diese Zwischenelemente gemäß Figur 2c auch radial geschlitzt sein.

Als Materialien für diese Zwischenelemente können alle elastischen Werkstoffe verwendet werden, wie beispielsweise Federstahl, Kunststoffe, Hartschaum und ähnlichem. Die Dicke, die Form und das Material und die mechanischen Eigenschaften der Zwischenelemente 4 sind auf die jeweilige Matte 5 abgestimmt und so gewählt, dass eine Stützfunktion sicher erreicht wird und sie sich der gewünschten Krümmung der Matte 5 anpassen können.

Allgemein stehen die Krümmung des gewünschten Bauteils, die Anzahl der möglichen Oberflächenfehler hierbei, Form und Material der Zwischenelemente, das Material und die Stärke der Formmatte und der Abstand der Stützelemente in einem direkten Zusammenhang.

Anhand von Figur 3 soll nun die Herstellung einer Matte 5 kurz erläutert werden. Die Matte 5 ist aus einem Zweikomponenten-Material auf Silikonbasis aufgebaut. Um eine geeignete verformbare Matte herzustellen, wird auf einer ebenen Platte 6, beispielweise aus Granit, ein Rahmen 7 aus Leisten aufgebaut. In der Regel begrenzen die Leisten ein Rechteck.

Sodann wird das Zweikomponenten-Material 8 in den Rahmen eingefüllt.

Eine zweite Platte 9 wird dann auf Abstandshülsen 10, die außerhalb des Rahmens 7 angeordnet sind, aufgelegt. Auch diese Platte 9 ist vollkommen eben und besteht beispielsweise auch aus Granit. Wesentlich hierbei ist, dass die Höhe der Abstandshülsen größer ist als die Rahmenhöhe, so dass zwischen Rahmen und Unterseite der zweiten Platte 9 ein Abstand vorhanden ist.

Sodann wird das Zweikomponenten-Material weiter in den Rahmen eingefüllt.

Aufgrund des Abstandes 11 kann nun das überschüssige Zweikomponenten-Material 8 abfließen. Dadurch wird erreicht, dass eine vollständig plane Oberfläche der Matte 5 erzielt wird.

Nach dem Aushärten des Zweikomponenten-Materials und Entfernen der Platte 9 kann das überschüssige Material im Abstand 11 vor oder nach Entnahme der fertigen Matte 5 entfernt werden.

Mit einer so hergestellten Matte können alle Bauteile umgeformt werden, die aus einem Material bestehen, dass sich unter Eigengewicht seiner Unterlagen anpasst. Die Umformung kann dabei bei Raumtemperatur oder mit erwärmten Bauteilen durchgeführt werden. Damit hat man die Möglichkeit, dreidimensional gekrümmte Oberflächen ohne Herstellen von Formen zu erzeugen. Ein wesentlicher Vorteil hierbei ist die kurze Herstellungszeit und damit verbunden die niedrigen Kosten gegenüber herkömmlich hergestellten Formen. Auch fallen keine Lagerkosten für eine Vielzahl verschiedener Formen an, noch müssen nicht mehr benötigte Formen entsorgt werden.

## Patentansprüche

1. Anordnung zur Herstellung von dreidimensionalen Bauteilen, umfassend eine verformbare Matte, die auf höhenverstellbaren Stützelementen aufliegt und das zu herzustellende Bauteil trägt,
**dadurch gekennzeichnet, dass** die Matte (5) aus einem Zweikomponenten-Material auf Silikonbasis besteht und eine Dichte im Bereich zwischen 0,5 g/cm³ und 3 g/cm³ und einen Elastizitätsmodul im Bereich von 2-30 N/mm² aufweist.

2. Anordnung nach Anspruch 1,
**dadurch gekennzeichnet, dass** die Matte (5) über Zwischenelemente (4) auf den Stützelementen aufliegt.

3. Anordnung nach Anspruch 2,
**dadurch gekennzeichnet, dass** die Zwischenelemente (4) aus einem elastischen Werkstoff bestehen.

4. Anordnung nach Anspruch 2 oder 3,
**dadurch gekennzeichnet, dass** die Zwischenelemente (4) aus Plexiglas bestehen.

5. Anordnung nach Anspruch 2 oder 3,
**dadurch gekennzeichnet, dass** die Zwischenelemente (4) aus Federstahl bestehen.

6. Anordnung nach einem der Ansprüche 2 - 5,
**dadurch gekennzeichnet, dass** die Zwischenelemente (4) scheibenförmig ausgebildet sind und radial verlaufende Einschnitte aufweisen.

7. Verfahren zur Herstellung einer verformbaren Matte nach Anspruch 1,
**dadurch gekennzeichnet, dass** ein Zweikomponenten-Material auf Silikonbasis in einen Rahmen gefüllt wird, der auf einer ebenen Platte steht, dass anschließend eine Deckplatte auf außerhalb des Rahmens angeordneten Abstandselementen aufgelegt wird, wobei die Abstandselemente höher sind als der Rahmen und dass der Rahmen zwischen den beiden Platten vollständig mit Material ausgefüllt wird.

## Claims

1. An arrangement for producing three-dimensional components, comprising a deformable mat which rests on vertically adjustable support elements and holds the component being produced,
**characterised in that** the mat (5) is made of a silicone-based two-component material and has a density in the range between 0.5 g/cm³ and 3 g/cm³ and an elastic modulus in the range from 2 to 30 N/mm².

2. An arrangement according to claim 1,
**characterised in that** the mat (5) rests on the support elements via intermediate elements (4).

3. An arrangement according to claim 2,
**characterised in that** the intermediate elements (4) are made of an elastic material.

4. An arrangement according to claim 2 or 3,
**characterised in that** the intermediate elements (4) are made of Plexiglas.

5. An arrangement according to claim 2 or 3,
**characterised in that** the intermediate elements (4) are made of spring steel.

6. An arrangement according to any of claims 2 to 5,
**characterised in that** the intermediate elements (4) are disc-shaped and are formed with radial incisions.

7. A method of producing a deformable mat according to claim 1,
**characterised in that** a silicone-based two-component material is poured into a frame resting on a flat plate, a cover plate is then placed on spacer elements disposed outside the frame, the spacer elements being higher than the frame, and the frame between the two plates is completely filled with material.

## Revendications

1. Dispositif de fabrication de pièces tridimensionnelles, comprenant une natte déformable qui repose sur des éléments de soutien réglables en hauteur et porte la pièce à fabriquer,
**caractérisé en ce que**
la natte (5) est faite d'un matériau à deux composants à base de silicone et présente une densité comprise entre 0,5 g/cm³ et 3 g/cm³ et un module d'élasticité dans la plage de 2 à 30 N/mm².

2. Dispositif selon la revendication 1,
**caractérisé en ce que**
la natte (5) est en appui sur les éléments de soutien par des éléments intermédiaires (4).

3. Dispositif selon la revendication 2,
**caractérisé en ce que**
les éléments intermédiaires (4) sont constitués d'un matériau élastique.

4. Dispositif selon la revendication 2 ou 3,
**caractérisé en ce que**
les éléments intermédiaires (4) sont en plexiglas.

5. Dispositif selon la revendication 2 ou 3,
**caractérisé en ce que**
les éléments intermédiaires (4) sont en acier à ressort.

6. Dispositif selon une des revendications 2 à 5,
**caractérisé en ce que**
les éléments intermédiaires (4) ont la forme de disques et présentent des encoches radiales.

7. Procédé de fabrication d'une natte déformable selon la revendication 1,
**caractérisé en ce qu'**
on remplit d'un matériau à deux composants à base de silicone un cadre placé sur une plaque plane, puis une plaque de couverture est appliquée sur des éléments d'espacement disposés en dehors du cadre et plus hauts que celui-ci, et le cadre situé entre les deux plaques est totalement rempli du matériau.
